(19) Europäisches Patentamt

European Patent Office

Office européen des brevets

(11) **EP 1 380 758 B1**

(12) **EUROPEAN PATENT SPECIFICATION**

(45) Date of publication and mention
of the grant of the patent:
**21.12.2005 Bulletin 2005/51**

(51) Int Cl.⁷: **F16B 5/02**, F16B 21/08,
F16B 37/04

(21) Application number: **03015159.1**

(22) Date of filing: **04.07.2003**

(54) **Screw grommet**

Halteöse für Schrauben

Manchon pour vis

(84) Designated Contracting States:
**AT DE GB**

(30) Priority: **10.07.2002 JP 2002200767**

(43) Date of publication of application:
**14.01.2004 Bulletin 2004/03**

(73) Proprietor: **Newfrey LLC**
**Newark, Delaware 19711 (US)**

(72) Inventor: **Dendo, Masashi,**
**c/o Pop Rivet Fastener K.K.**
**Toyohashi-shi, Aichi-ken (JP)**

(74) Representative: **Haar, Lucas Heinz Jörn et al**
**Patentanwälte Haar & Schwarz-Haar,**
**Lessingstrasse 3**
**61231 Bad Nauheim (DE)**

(56) References cited:
**GB-A- 2 069 089**     **US-A- 2 836 214**
**US-A- 4 077 300**     **US-A- 4 971 500**
**US-A- 5 593 262**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a screw grommet suitable for mounting a mounted member such as a component or bracket to a workpiece such as a body panel for an automobile and, more specifically, to a screw grommet comprising a shank inserted into a mounting hole in a workpiece and a flange formed at one end of the shank that is larger than the mounting hole in the workpiece with a hollow cavity formed in the shank and flange into which a tapping screw can be screwed, and where a tapping screw is screwed into the hollow cavity to join a mounted member to the workpiece.

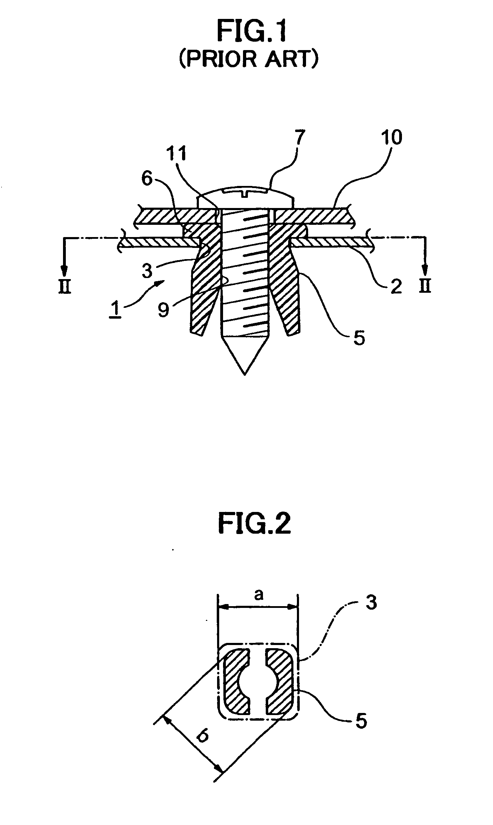

FIG 1 and FIG 2 show a screw grommet 1 of the prior art. The screw grommet 1 is made of plastic, and consists of a shank 5 inserted into a mounting hole 3 in a workpiece 2 and a flange 6 formed at one end of the shank 5 that is wider than the mounting hole in the workpiece 2. A hollow cavity 9 is formed in the shank 5 and flange 6 into which a tapping screw 7 can be screwed. The screw grommet 1 is attached to the workpiece 2 by inserting the shank 5 into the mounting hole 3 in the workpiece 2 and bringing the flange 6 into contact with the workpiece. The mounting hole 1 in a mounted member 10 such as a component or bracket is aligned with the hollow cavity 9, and a tapping screw 7 is screwed in to join the mounted member 10 to the workpiece 2. This type of screw grommet 1 is able to attach the mounted member 10 securely even when the workpiece 2 is a thin panel.

In the screw grommet 1 of the prior art shown in FIG 1 and FIG 2, the horizontal cross sections of the mounting hole 3 in the workpiece 2 and the shank 5 are rectangular so the screw grommet 1 does not rotate with the turning tapping screw with respect to the workpiece 2. (See FIG 2.) However, as shown in FIG 2, it rotates with a fastened tapping screw when the difference in the length (a) on one side of the mounting hole 3 and the diagonal length (b) of the shank 5 is small. When the size of the mounting hole 3 is small, the difference between length (a) and length (b) is also small, and the grommet is likely to rotate. If the tapping screw is not adequately secured because of the rotating grommet, the joining force is inadequate and a rotating grommet and screw cannot be ruled out.

A screw grommet according to the preamble of claim 1 is known from US-A-5,593,262 and comprises a pair of top and bottom ramp-shaped engagement abutments which are formed on opposite sides of the shank and are positioned in the center between the corners of the periphery of the rectangular cross-section of the shank.

It is further known from US-A-4,971,500 a plastic screw grommet including a head flange and a shank portion wherein the head flange is provided with four radially extending U-shaped slots so as to permit flexing upon insertion into a panel. The shank portion includes two sets of opposed ramps formed in the middle of opposed outer surfaces in an offset relationship with each other. The shank portion further includes a plurality of convex-shaped corner posts that extend axially one on each side of the opposed ramps and form internal U-shaped slots which are opened towards the receiving bore thereby increasing the radial flexibility of the shank portion.

US-A-2,836,214 discloses a one-piece plastic rivet type fastener including a four-sided shank and a head extending radially outwardly from one end of the shank. The shank is bifurcated by a longitudinal recess which bisects the opposed peripheral sides of the shank so as to present a pair of laterally spaced, transversely yieldable shank sections having opposed longitudinal inner grooves defining a central aperture for receiving a rotary thread-forming screw. The peripheral surfaces of the shank sections oppositely disposed from each other have shoulders intermediate the head and the entering end of the shank cooperating with the head to secure the fastener within the work after the shank has been snapped into position within a work aperture.

A screw grommet having a hollow stem for engagement in a hole, an external head flange at the outer end of the stem and a screw receiving passageway through the head flange and the stem is disclosed in GB-A-2 069 089. This grommet has a number of longitudinal slots in the stem extending from the passageway through the outer surface of the stem and also extending in the head flange outwardly from the passageway, wherein the external surfaces of the stem between adjacent pairs of slots are flat. No shoulders or engaging sections are provided.

Further it is known from US-A-4,077,300 a plastic screw grommet which comprises a flange head and a shank having a polygonal cross section and perpendicularly extending from the flange head. Depressions are formed centrally on the sides of the shank in the surface layer thereof and rigid engaging projections are joined throughout their length and formed to rise from the bottoms of the depressions. The screw aperture extends inwardly from the topside of the flange head along the axis of the shank and grooves extend radially from the inner wall of the screw aperture to a point adjacent the corners of the shank.

The screw grommet disclosed in Unexamined Utility Model Application Publication No. 49-25957 has a rectangular horizontal cross section suitable for a rectangular mounting hole in a workpiece, and axial slits are formed in the flange and shank in positions corresponding to the center of the sides of the rectangular horizontal cross section to the turning tapping screw widens the flange and shank in a direction perpendicular to the axial direction. However, the slits extend the entire axial length of the shank, which reduces the strength of the shank. When a tapping screw is screwed in, there is insufficient resistance to the fastening torque and the tapping screw cannot be screwed in properly. Because there are no engaging sections on the shank adjacent to the flange on the underside of the workpiece, the shank sticks out axially after the tapping screw has been screwed in, and the retention force is not high. The screw grommet disclosed in Unexamined Utility Model Application Publication No. 55-124618 has engaging sections on the shank adjacent to the flange on the underside of the workpiece, but the shank does not widen when the tapping screw is turned in. As a result, the grommet is likely to rotate with the tapping screw. The screw grommet disclosed in Unexamined Utility Model Application Publication No. 7-10572 has a shank with a rectangular horizontal cross section and axial slits in the flange and shank corresponding to the corners of the rectangular horizontal cross section. The flange and shank widen when the tapping screw is screwed in, and there are engaging sections on the shank adjacent to the flange on the underside of the workpiece. However, because the shank in this screw grommet is divided into four sections by slits extending the entire length, there is insufficient resistance to the fastening torque when the tapping screw is screwed in and the tapping screw cannot be screwed in properly.

Therefore, the purpose of the present invention is to provide a screw grommet able to obtain high retention force with respect to a workpiece without rotating together with a screw turned therein.

The present invention achieves this purpose by providing a screw grommet comprising a shank inserted into a mounting hole in a workpiece and a flange formed at one end of the shank that is larger than the mounting hole in the workpiece, wherein a hollow cavity is formed in the shank and flange into which a tapping screw can be screwed, wherein a tapping screw is screwed into the hollow cavity to join a mounted member to the workpiece, wherein the shank has a rectangular cross-section appropriate for a rectangular mounting hole in the workpiece, wherein both the flange and the axial mid-section of the shank are divided into a plurality of axial slits so as to widen in a direction perpendicular to the axial direction of the shank by screwing the tapping screw into the hollow cavity, wherein a pair of engaging sections are formed in the outer periphery of the shank separated axially from the flange essentially by the thickness of the workpiece, and wherein the pair of engaging sections are arranged diagonally to each other diagonally in the rectangular cross-section of the shank.

The screw grommet of the present invention maintains the strength of the shank and prevents the shank from turning even when a tapping screw is screwed in. The turning tapping screw also expands the shank section outwardly in the radial direction inside the mounting hole in the workpiece to securely engage the wall surface of the mounting hole. In this way, the rectangular horizontal cross section of the shank engages the rectangular horizontal cross section of the mounting hole properly and the outer wall of the shank section frictionally engages the wall surface of the mounting hole, keeping the screw grommet from turning with the tapping screw even when the size of the mounting hole is small. The turning tapping screw causes the engaging sections to engage diagonally on the undersurface of the workpiece to effectively secure the grommet. The diagonal length is also greater than the length of one side of the rectangular horizontal cross section, which further prevents rotation of the grommet with the screw.

In this screw grommet, the axial slits should be formed in positions corresponding to the center of the periphery of the rectangular horizontal cross section, and the engaging sections should have an L-shaped horizontal cross section including the positions corresponding to the corners of the rectangular horizontal cross section. Because the area of the engaged surface between an engaging section and the workpiece is greater than the engaging section formed in the center of one side, the retention force is higher and the workpiece does not become deformed. In this screw grommet, the slits should end midway in the hollow cavity of the shank, and the section of the hollow cavity extending axially without slits to the tip of the shank should have a length able to accommodate at least one pitch length of the screwed in tapping screw. This secures the tapping screw firmly to the screw grommet, and keeps the tapping screw secured to the screw grommet even when the mounted member sustains a strong turning force. It also resists a strong force sustained in the direction of the mounted member.

The following is an explanation of embodiments of the present invention with reference to the drawings, wherein:

FIG 1 is a cross-sectional view of a screw grommet of the prior art used to mount a mounted member on a workpiece with a tapping screw.

FIG 2 is a cross-sectional view of the screw grommet in FIG 1 from line II-II.

FIG 3 is a perspective view of the screw grommet in an embodiment of the present invention.

FIG 4 is a planar view of the screw grommet in FIG 3.

FIG 5 is a front view of the screw grommet in FIG 3.

FIG 6 is a drawing used to explain the length of the slits and the length of the hollow cavity in the screw grommet in FIG 3.

FIG 7 (A) is a cross-sectional view of the shank in a screw grommet of the present invention showing the engaging sections in the shank formed diagonally on the rectangular periphery.

FIG (B) is a cross-sectional view of the shank in a screw grommet of the present invention showing the engaging sections in the shank formed in the center of the rectangular periphery.

FIG 8 is a cross-sectional view of the screw grommet of the present invention in FIG 3 from line VII-VIII used to mount a mounted member on a workpiece with a tapping screw.

FIG 9 (A) is a cross-sectional view of the screw grommet in FIG 8 from line IX-IX before the screw is screwed in.

FIG 9 (B) is a cross-sectional view of the screw grommet in FIG 8 from line IX-IX after the screw is screwed in.

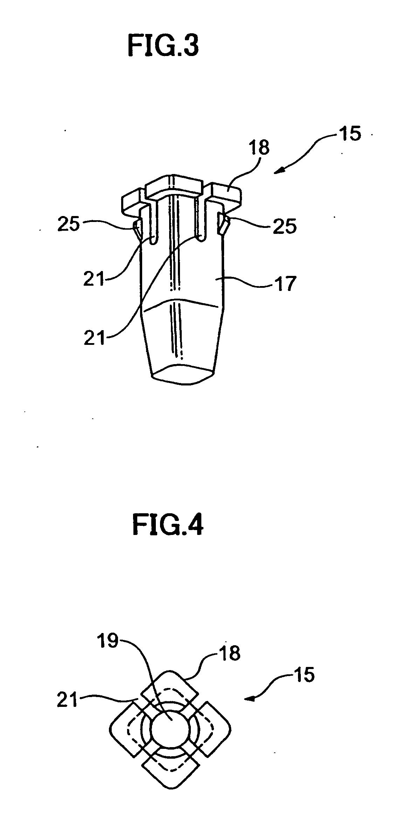

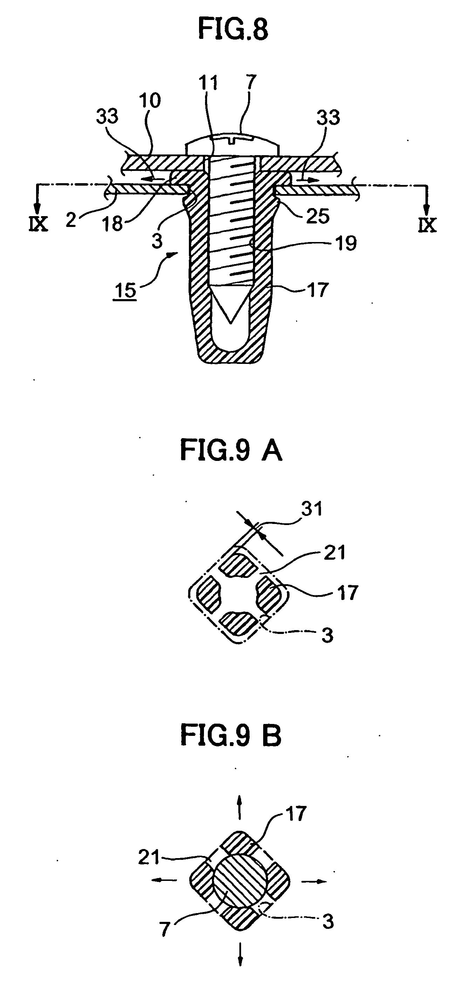

The screw grommet 15 of the first embodiment of the present invention is shown in FIG 3 to FIG 7 (A). FIG 8 and FIG 9 (A) and (B) show a mounted member 10 joined to a workpiece 2 using the screw grommet 15.

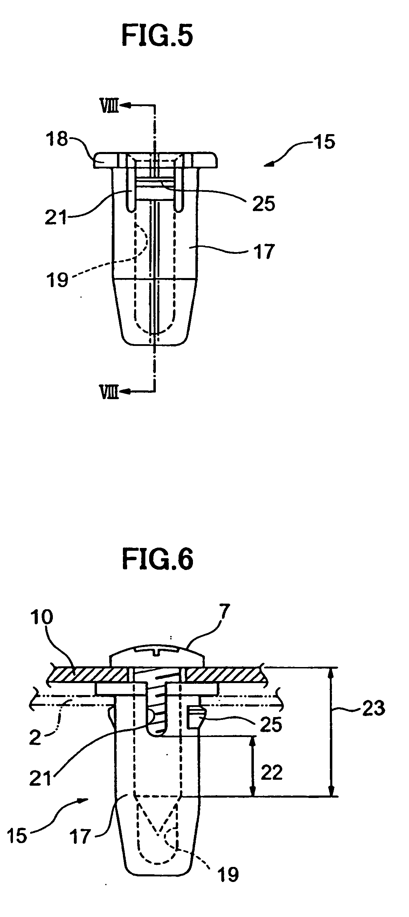

The following is an explanation of the configuration of the screw grommet 15 with reference to FIG 3 to FIG 7. The screw grommet 15 is made entirely of plastic. The screw grommet 15 consists of a shank 17 inserted into a mounting hole in a workpiece 2 and a flange 18 formed at one end of the shank 17 that is larger than the mounting hole in the workpiece 2. A hollow cavity 19 is formed in the shank 17 and flange 18 into which a tapping screw 7 (see FIG 6) can be screwed. The shank 17 has a rectangular horizontal cross-section appropriate for a rectangular mounting hole in the workpiece 2. The rectangular horizontal cross-section is similar to the rectangular mounting hole, and the size is the same or somewhat smaller so it can be inserted into the rectangular mounting hole with the application of a small amount of pressure. The flange 18 has a rectangular shape similar to the rectangular horizontal cross-section in the shank 17 and is attached in a continuous manner. The rectangular flange 18 on the shank 17 is angled appropriately with respect to the mounting hole so the flange 18 fits properly with respect to the mounting hole after mounting. The flange 18 should be large enough to keep from entering the mounting hole in the workpiece 2.

The flange 18 and the axial section of the shank midway from the flange 18 possess a plurality of slits 21 extending axially. Because the slits 21 stop midway in the shank 17, the strength of the shank is maintained but the shank does not turn when the tapping screw is screwed in. These slits 21 allow the flange 18 and shank 17 to expand in the direction perpendicular to the axial direction (outward radially) when the tapping screw 7 is screwed into the hollow cavity 19. Therefore, a section of the shank expands outward radially in the mounting hole of the workpiece and the outer surface of this section of the shank strongly engages the inner wall of the mounting hole. The slits 21 also make the section of the shank 17 near the flange 18 flexible inwardly in the radial direction. This allows the section of the shank near the flange 18 where the engaging sections 25 (described below) are formed to pass through the mounting hole in the workpiece. By bending inward radially, the shank 17 can be inserted into the mounting hole in the workpiece easily.

The slits 21 are formed in positions corresponding to the sides of the rectangular horizontal cross section of the shank 17. Here, four slits 21 are formed corresponding to the number of sides in the rectangular horizontal cross section. These slits 21 are positioned in the middle of the shank 17 and stop midway through the hollow cavity 19. The hollow cavity 19 extends axially where there are no slits towards the end of the shank 17 (the bottom end in FIG 3, FIG 5 and FIG 6). As shown in FIG 6, the section of the hollow cavity without any slits (the section equivalent to length 22) is long enough and wide enough for at least one pitch length of the screw in the effective screwing range 23 of the tapping screw. The section of the hollow cavity without any slits (22) can accommodate the screw section of the tapping screw exceeding one pitch in the length range of the shank 17. The section of the hollow cavity without any slits (22) is able to secure the tapping screw 7 in the shank 17. The screw grommet is able to hold the tapping screw even when a strong turning force is applied to the workpiece. It is also able to resist a strong force from the workpiece to keep the workpiece attached.

A pair of engaging sections 25 is formed in the outer surface of the shank 17 in positions separated axially from the flange 18 at least by the thickness of the workpiece 2 and diagonal to each other with respect to the rectangular horizontal cross section. As shown in FIG 3, the engaging sections 25 are inclined with a section coming into contact with the flange 18 and a section at the end of the shank (bottom end). The mid-section protrudes outward radially. The height of the protrusion is formed in a length extending outward radially from the mounting hole in the workpiece. The inclined section of the engaging sections 25 near the flange 18 is at a nearly 90° angle with respect to the outer surface of the shank so as to form an engaging shoulder for the workpiece. The inclined surface near the end of the shank is at a gentler angle with respect to the outer surface of the shank so as to allow the shank to be easily inserted into the mounting hole.

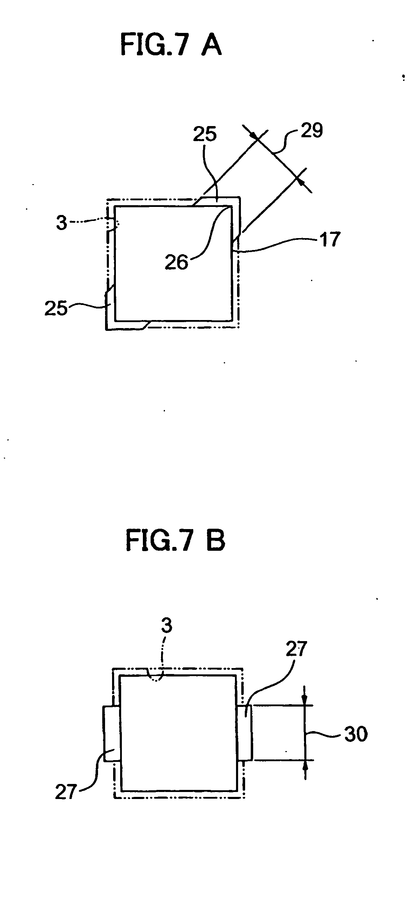

The engaging sections 25, as shown in FIG 5, are formed at a constant length in the outward direction of the shank 17. As shown in FIG 7 (A), they also have an L-shaped horizontal cross section including the position corresponding to the corners of the rectangular horizontal cross section. As a result, the area of engagement between the engaging sections 25 and the workpiece is greater than engaging sections formed in the center of one side of the rectangle. FIG 7 (B) shows engaging sections 27 formed in the center of one side of the rectangle. If the length A of the straight length 29 of engaging sections 25 is the same as the straight length 30 of engaging sections 27, then the length of the L-shaped sections of the engaging sections 25 is $\sqrt{2} \cdot A$, or greater than the engaging sections (27) formed in the center of one side of the rectangle. This increases the retention force. Because the engaging sections 25 have and L shape, they are stronger than engaging sections with a straight shape. Because the engaging sections 25 in the corners of the mounting hole 3 distribute the supporting force in two directions, the supporting force is distributed in the workpiece 2 and deformation is less likely. In this example, there is a single pair of engaging sections 25 arranged diagonally with respect to each other in the rectangular horizontal cross section. Normally, a pair of engaging sections is sufficient because of the high retention strength. However, if even more retention strength is required, another pair of engaging sections 25 can be arranged diagonally with respect to each other in the rectangular horizontal cross section.

A mounted member 10 attached to a workpiece 2 using one of these screw grommets 15 and tapping screws 7 is shown in FIG 8. FIG 9 (A) is a cross-sectional view from line IX-IX in FIG 8 showing the shank 17 of the screw grommet 15 inserted into the mounting hole 3 in the workpiece 2 before the tapping screw 7 has been screwed in. FIG 9 (B) is a cross-sectional view from line IX-IX in FIG 8 showing the shank 17 of the screw grommet 15 inserted into the mounting hole 3 in the workpiece 2 after the tapping screw 7 has been screwed in. If there is a gap 31 between the shank 17 and the mounting hole 3 in the workpiece 2, the screw grommet 15 can be installed in the workpiece 2 using less force. The gap 31 shown here is not essential and can be eliminated. A worker takes hold of the screw grommet 15 and inserts the shank 17 into a mounting hole 3 in a workpiece 2 such as an automobile body panel until the flange 18 comes into contact with the workpiece 2. The engaging sections 25 in the shank 17 are bent inward radially inside the mounting hole 3, and then extend out from the underside of the workpiece 2 where they engage the edge of the mounting hole 3. The screw grommet 15 is thus attached to the workpiece 2.

Next, the worker takes hole of a mounted member 10 such as a component or bracket, aligns the mounting hole 11 with the hollow cavity 19 in the flange 18, inserts a tapping screw 7 into the mounting hole 11 in the mounted member 10, and screws the tapping screw into the hollow cavity 19 of the screw grommet 15. The screwing action expands the section of the shank 19 inside the mounting hole 3 of the workpiece 2 outward radially as indicated by the arrow in FIG 9 (B) due to the slits 21, and the outer surface of the shank securely engages the wall of the mounting hole 3. The rectangular horizontal cross section of the shank engages the rectangular horizontal cross section of the mounting hole properly and the outer wall of the shank section frictionally engages the wall surface of the mounting hole, keeping the screw grommet from turning with the tapping screw even when the size of the mounting hole is small. The turning tapping screw 7 causes the engaging sections 25 to engage diagonally on the undersurface of the workpiece as indicated by the arrow 33 in FIG 8 to effectively secure the screw grommet 15 to the workpiece 2 and further improve the anti-turning function. Because the axial slits 21 stop midway in the shank 17, the strength of the shank 17 is maintained and the shank does not turn with the tapping screw. Because section of the hollow cavity without slits extends axially to the tip of the shank should and has a length able to accommodate at least one pitch length of the screwed in tapping screw, the tapping screw 7 is secured firmly to the screw grommet 15, and the tapping screw 7 remains secured to the screw grommet 15 even when the mounted member 10 sustains a strong turning force. It also resists a strong force sustained in the direction of the mounted member.

The screw grommet of the present invention maintains the strength of the shank and prevents the shank from turning even when a tapping screw is screwed in. The turning tapping screw also expands the shank section outwardly in the radial direction inside the mounting hole in the workpiece to securely engage the wall surface of the mounting hole. In this way, the rectangular horizontal cross section of the shank engages the rectangular horizontal cross section of the mounting hole properly and the outer wall of the shank section frictionally engages the wall surface of the mounting hole, keeping the screw grommet from turning with the tapping screw even when the size of the mounting hole is small. The turning tapping screw causes the engaging sections to engage diagonally on the undersurface of the workpiece to effectively secure the grommet. Because the engaging area is wider and the retention force is high, the anti-turning function is further strengthened.

Reference Numerals:

1    screw grommet of the prior art
2    workpiece
3    mounting hole in the workpiece
5    shank
6    flange
7    tapping screw
9    hollow cavity
10   mounted member
11   mounting hole in the mounted member
15   screw grommet of the present invention
17   shank
18   flange
19   hollow cavity
21   axial slit
22   ength of the hollow cavity without slits
23   effective screwing range

25 engaging section
26 corner of the rectangular horizontal cross section
31 gap

## Claims

1. Screw grommet (15) comprising a shank (17) inserted into a mounting hole in a workpiece and a flange (18) formed at one end of the shank (17) that is larger than the mounting hole in the workpiece, wherein a hollow cavity (19) is formed in the shank (17) and flange (18) into which a tapping screw can be screwed, wherein a tapping screw is screwed into the hollow cavity (19) to join a mounted member to the workpiece, wherein the shank (17) has a rectangular cross-section appropriate for a rectangular mounting hole in the workpiece, wherein both the flange (18) and the axial mid-section of the shank (17) are divided by a plurality of axial slits (21) thus allowing the flange (18) and the shank (17) to widen in a direction perpendicular to the axial direction of the shank (17) by screwing the tapping screw into the hollow cavity, wherein a pair of engaging sections (25) are formed in the outer periphery of the shank (17) separated axially from the flange (18) essentially by the thickness of the workpiece, **characterised in that** the pair of engaging sections (25) are arranged diagonally to each other in the rectangular cross-section of the shank (17).

2. Screw grommet in accordance with claim 1, wherein the axial slits (21) are formed in positions corresponding to the center of the sides of the periphery of the rectangular horizontal cross section, and wherein the engaging sections (25) have an L-shaped horizontal cross section including the positions corresponding to the corners of the rectangular horizontal cross section.

3. Screw grommet in accordance with claim 1 or claim 2, wherein the slits (21) end midway in the hollow cavity (19) of the shank, and wherein the section of the hollow cavity extending axially without slits (21) to the tip of the shank (17) has a length able to accommodate at least one pitch length of the screwed in tapping screw.

## Patentansprüche

1. Halteöse (15) für Schrauben, die einen in eine Befestigungsbohrung eines Werkstücks eingesetzten Schaft (17) aufweist sowie einen an einem Ende des Schaftes (17) ausgebildeten Flansch (18), der größer ist als die Befestigungsbohrung in dem Werkstück, wobei in dem Schaft (17) und dem Flansch (18) ein Hohlraum (19) ausgebildet ist, in den eine Schneidschraube einschraubbar ist, wobei eine Schneidschraube in den Hohlraum (19) eingeschraubt wird, um ein Montageteil mit dem Werkstück zu verbinden, wobei der Schaft (17) eine rechteckige Querschnittsform aufweist, die zur Aufnahme in einer rechteckigen Befestigungsbohrung in dem Werkstück geeignet ist, wobei sowohl der Flansch (18) als auch der axiale Mittelteil des Schaftes (17) durch mehrere axiale Schlitze (21 gespalten sind, damit der Flansch (18) und der Schaft (17) sich senkrecht zur axialen Richtung des Schaftes (17) aufweiten können, wenn die Schneidschraube in den Hohlraum eingeschraubt wird, wobei am Außenumfang des Schaftes (17) zwei Eingriffselemente (25) ausgebildet sind, deren axialer Abstand von dem Flansch (18) im wesentlichen der Dicke des Werkstücks entspricht, **dadurch gekennzeichnet, dass** die beiden Eingriffselemente (25) diagonal zueinander im rechteckigen Querschnitt des Schaftes (17) angeordnet sind.

2. Halteöse für Schrauben nach Anspruch 1, wobei die axialen Schlitze (21) an Stellen ausgebildet sind, die der Mitte der Seitenflächen des Umfangs des rechteckigen horizontalen Querschnitts entsprechen, und wobei die Eingriffselemente (25) zusammen mit den Stellen, die den Ecken des rechteckigen horizontalen Querschnitts entsprechen, eine L-förmige horizontale Querschnittsform aufweisen.

3. Halteöse für Schrauben nach Anspruch 1 oder Anspruch 2, wobei die Schlitze (21) in der Hälfte des Hohlraums (19) des Schaftes enden und wobei der Teil des Hohlraums, der sich ohne Schlitze (21) in axialer Richtung bis zur Spitze des Schaftes (17) erstreckt, so lang ist, dass er wenigstens eine Steigung der eingeschraubten Schneidschraube aufnehmen kann.

## Revendications

1. Manchon (15) pour vis comprenant un tube (17) inséré dans un trou de montage formé dans une pièce à traiter et une bride (18) formée sur une extrémité du tube (17), qui est plus grand que le trou de montage dans la pièce à usiner, dans lequel une cavité évidée (19) est formée dans le tube (17) et dans la bride (18)dans laquelle une vis auto-taraudeuse peut être vissée, dans lequel une vis auto-taraudeuse est vissée dans la cavité évidée (19) pour réunir un élément monté à la pièce à traiter, dans lequel le tube (17) possède une section transversale rectangulaire convenant pour un trou de montage rectangulaire dans la pièce à traiter, dans lequel la bride (18) et la demi-section axiale du tube (17) sont divisées par une pluralité de fentes axiales (21) permettant ainsi à la bride et au tube (17) de s'élargir dans une direction perpendiculaire à la direction axiale du tube (17) sous l'effet du vissage de la vis auto-taraudeuse dans la cavité évidée, dans lequel une paire de sections d'engagement (25) sont formées dans la périphérie extérieure du tube (17) en étant séparées axialement de la bride (18) essentiellement par l'épaisseur de la pièce à traiter, **caractérisé en ce que** la paire de sections d'engagement (25) sont disposées en diagonale l'une par rapport à l'autre dans la section transversale rectangulaire du tube (17).

2. Manchon pour vis selon la revendication 1, dans lequel les fentes axiales (21) sont formées dans des positions correspondant au centre des côtés de la périphérie de la section transversale horizontale rectangulaire, et dans lequel les sections d'engagement (25) possèdent une section transversale horizontale en forme de L incluant les positions correspondant aux coins de la section transversale horizontale rectangulaire.

3. Manchon pour vis selon la revendication 1 ou la revendication 2, dans lequel les fentes (21) se terminent à mi-chemin dans la cavité évidée (19) du tube, et dans lequel la section de la cavité évidée, qui s'étend axialement sans fente (21) jusqu'à la pointe du tube (17), possède une longueur permettant de loger une longueur d'au moins un pas de la vis auto-taraudeuse vissée.

# FIG.1
## (PRIOR ART)

# FIG.2

# FIG.3

# FIG.4

# FIG.5

# FIG.6

# FIG.7 A

# FIG.7 B

EP 1 380 758 B1

# FIG.8

# FIG.9 A

# FIG.9 B